# EUROPEAN PATENT APPLICATION

(11) **EP 4 629 197 A1**
(43) Date of publication of application: **08.10.2025**
(21) Application number: 25157554.4
(22) Date of filing: 13.02.2025
(51) Int. Cl.: G06V 40/16, H04N 23/611

(54) **INFORMATION PROCESSING SYSTEM, IMAGE PROCESSING METHOD, AND IMAGE PROCESSING PROGRAM**

(30) Priority: 03.04.2024 JP 2024059898
(71) Applicant: Lenovo (Singapore) Pte. Ltd., New Tech Park 556741 (SG)
(72) Inventor: KAWANO, Seiichi, Yokohama-shi, 220-0012 (JP); IMAI, Takumi, Yokohama-shi, 220-0012 (JP); OKADA, Mamoru, Yokohama-shi, 220-0012 (JP); TAKATA, Hirokazu, Kyoto-shi, 600-0000 (JP); KURODA, Shou, Osaka-shi, 530-0000 (JP); IMANISHI, Yoshimitsu, Kyoto-shi, 600-0000 (JP); TAKAISHI, Toshio, Shibuya-ku, 150-0000 (JP)
(74) Representative: Openshaw & Co.

(57) **Abstract**

To improve user experience.

An information processing apparatus includes a feature detection unit that detects a feature region based on a feature related to a person in an image acquired by a camera, a frame setting unit that virtually sets a plurality of frames in the image in accordance with the detected feature region, a frame selecting unit that selects a frame of interest from among the plurality of frames based on a predetermined condition as a frame of interest, and an image output unit that outputs an image of the frame of interest as a highlight image to be highlighted.

## Description

### BACKGROUND OF THE INVENTION

### Field of the Invention

The present disclosure relates to an information processing system, an image processing method, and an image processing program.

### Description of the Related Art

In recent years, Web meetings have been frequently held, and accordingly, a camera module having a function suitable for Web meetings or the like has been proposed. For example, in the related art, a camera module that incorporates a visual processing unit (VPU), automatically performs framing (adjustment of viewing angle), and realizes a more natural Web meeting has been proposed.

Such a camera module detects a position of a person in an image, specifies a region of interest (ROI) of a speaker or the like in the image, and performs auto framing (automatic adjustment of pan, tilt, and zoom) to highlight the region of interest.

### SUMMARY OF THE INVENTION

In the auto framing in the related art, for example, in a meeting, in which a plurality of people are included in the image, or the like, in a case where the speaker is frequently switched, the auto framing is seamlessly performed each time the speaker is changed. Since the camera work in this image is as if a single camera is used to capture a meeting, and the camera follows and zooms in on the frequently switching speakers, the image is excessively changed, and there is a possibility of degrading the user experience.

The present disclosure has been made in view of such circumstances, and an object thereof is to provide an information processing system, an image processing method, and an image processing program capable of improving a user experience.

An information processing system according to an aspect of the present disclosure includes: a feature detection unit configured to detect a feature region based on a feature related to a person in an image acquired by a camera; a frame setting unit configured to virtually set a plurality of frames in the image in accordance with the detected feature region; a frame selecting unit configured to select a frame of interest from among the plurality of frames based on a predetermined condition as a frame of interest; and an image output unit configured to output an image of the frame of interest as a highlight image to be highlighted.

An image processing method according to another aspect of the present disclosure includes: via a computer, detecting a feature region based on a feature related to a person in an image acquired by a camera; virtually setting a plurality of frames in the image in accordance with the detected feature region; selecting a frame of interest from among the plurality of frames based on a predetermined condition as a frame of interest; and outputting an image of the frame of interest as a highlight image to be highlighted.

An image processing program according to still another aspect of the present disclosure is for causing a computer to execute the above image processing method.

The information processing system, the image processing method, and the image processing program according to the above-described aspects of the present disclosure can achieve an effect of improving the user experience.

### BRIEF DESCRIPTION OF THE DRAWINGS

FIG. 1 is a system configuration diagram schematically illustrating a system configuration of a Web meeting system according to an embodiment of the present disclosure.
FIG. 2 is a schematic configuration diagram illustrating an example of a hardware configuration of an information processing apparatus according to the embodiment of the present disclosure.
FIG. 3 is a functional configuration diagram illustrating an example of an image processing function provided in the information processing apparatus according to the embodiment of the present disclosure.
FIG. 4 is a diagram illustrating an example of an image acquired by a camera according to the embodiment of the present disclosure.
FIG. 5 is a diagram for describing a function of a face detection unit according to the embodiment of the present disclosure.
FIG. 6 is a diagram for describing a frame setting method according to the embodiment of the present disclosure.
FIG. 7 is a diagram for describing the frame setting method according to the embodiment of the present disclosure.
FIG. 8 is a diagram for describing a frame adjustment method according to the embodiment of the present disclosure.
FIG. 9 is a diagram for describing the frame adjustment method according to the embodiment of the present disclosure.
FIG. 10 is a diagram illustrating an example of a display screen according to the embodiment of the present disclosure.
FIG. 11 is a flowchart illustrating an example of a processing procedure of an image processing method according to the embodiment of the present disclosure.

### DETAILED DESCRIPTION OF THE INVENTION

Hereinafter, an embodiment of an information processing system, an image processing method, and an image processing program according to the embodiment of the present disclosure will be described with reference to the drawings. In the following, an information processing apparatus 10 will be described as an example of the information processing system.

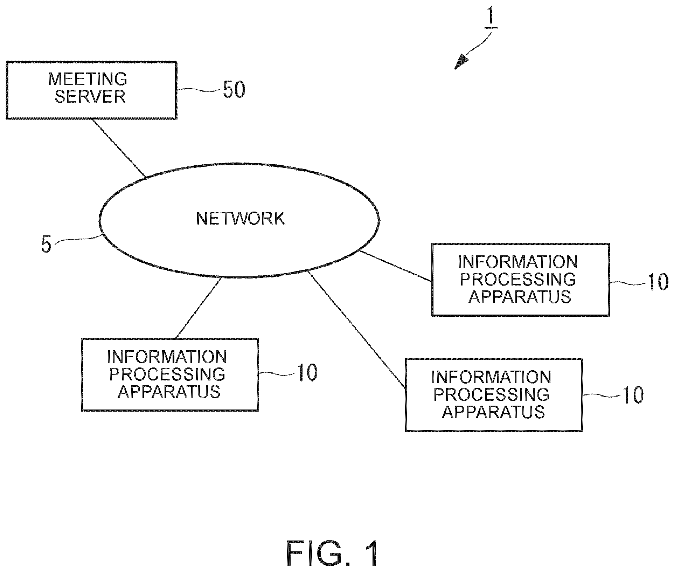

FIG. 1 is a system configuration diagram schematically illustrating a system configuration of a Web meeting system 1 according to the embodiment of the present disclosure. As illustrated in FIG. 1, a plurality of information processing apparatuses 10 and a meeting server 50 are connected to a network 5. Examples of the information processing apparatus 10 include a desktop PC, an all-in-one PC in which a display and a main body are integrated, a laptop PC, a tablet terminal, and a smartphone.

In the example illustrated in FIG. 1, three information processing apparatuses 10 are illustrated, but the number of connected information processing apparatuses is not limited to this.

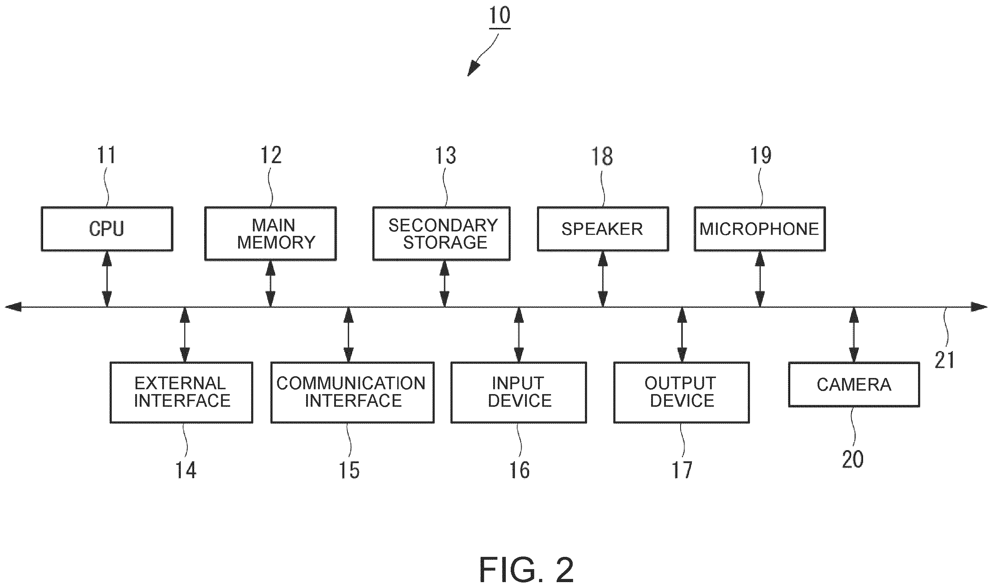

FIG. 2 is a schematic configuration diagram illustrating an example of a hardware configuration of the information processing apparatus 10 according to the present embodiment. As illustrated in FIG. 2, the information processing apparatus 10 includes, for example, a central processing unit (CPU: processor) 11, a main memory 12, a secondary storage (memory) 13, an external interface 14, and a communication interface 15. These units are connected to each other directly or indirectly via a bus 21, and cooperate with each other to execute various types of processing.

In addition, the information processing apparatus 10 may include an input device 16 and an output device 17. In addition, the information processing apparatus 10 may include a speaker 18, a microphone 19, and a camera 20. The input device 16, the output device 17, the speaker 18, the microphone 19, and the camera 20 may all be mounted on the main body of the information processing apparatus 10, or may be provided as external devices connected via the external interface 14 or the communication interface 15.

The CPU 11 controls the entire information processing apparatus 10, for example, using an operating system (OS) stored in the secondary storage 13, which is connected thereto via the bus 21, and executes various types of processing by executing various programs stored in the secondary storage 13. One or a plurality of CPUs 11 may be provided, and the CPUs 11 may cooperate with each other to realize the processing.

The main memory 12 is composed of, for example, writable memory such as a cache memory, a random access memory (RAM), and is used as a work region for reading out an execution program of the CPU 11, writing processing data of the execution program, and the like.

The secondary storage 13 is a non-transitory computer readable storage medium. The secondary storage 13 is, for example, a magnetic disk, a magneto-optical disk, a CD-ROM, a DVD-ROM, a semiconductor memory, or the like. Examples of the secondary storage 13 include a read only memory (ROM), a hard disk drive (HDD), and a solid state drive (SSD) flash memory. The secondary storage 13 stores, for example, an OS for controlling the entire information processing apparatus 10, such as Windows (registered trademark), iOS (registered trademark), or Android (registered trademark), a basic input/output system (BIOS), various device drivers for hardware operation of peripheral devices, various application software, various types of data, files, or the like. In addition, the secondary storage 13 stores a program for realizing various types of processing and various types of data required for realizing various types of processing. A plurality of secondary storages 13 may be provided, and the program or data as described above may be divided and stored in each secondary storage 13.

The external interface 14 is an interface for connecting with external devices. Examples of the external device include an external monitor, a USB memory, an external HDD/SSD, an external camera, an external audio device, or the like. In the example illustrated in FIG. 2, although only one external interface is illustrated, a plurality of external interfaces may be provided. Examples of the interface standard related to the external monitor include a display port, high-definition multimedia interface (HDMI (registered trademark)), a digital visual interface (DVI), and a video graphics array (VGA).

The communication interface 15 is connected to the network to communicate with other devices, and functions as an interface for transmitting and receiving information. For example, the communication interface 15 communicates with other devices via wired or wireless methods. Examples of wireless communication include communication via communication lines such as Bluetooth (registered trademark), Wi-Fi, a mobile communication system (3G, 4G, 5G, 6G, LTE, or the like), and a wireless LAN. Examples of the wired communication include communication via communication lines such as a wired local area network (LAN) .

The input device 16 is a user interface for the user to perform an input operation, and examples thereof include a keyboard, a touch pad, and a pointing device. Examples of the pointing device include a mouse, a touch panel, a pen tablet, a track pad, and a track ball.

Examples of the output device include a display, and a projector.

The speaker 18 converts audio data into sound and outputs the sound. The microphone 19 converts the sound into audio data, which is an electric signal, and outputs the audio data. The speaker 18 and the microphone 19 may be provided separately, or may be provided as an integrated acoustic system.

The camera 20 includes, for example, a lens, a lens driving unit, and an image sensor. The lens captures light from the subject and forms a subject image on the image sensor. The image sensor converts light captured by the lens into signal charges and captures the subject image. In the image sensor, for example, an analog image signal is generated by capturing signal values of red (R), green (G), and blue (B) in an order corresponding to a Bayer arrangement, and image data (RAW data) obtained by converting the obtained image signal from an analog method to a digital method is generated. Further, predetermined signal processing, for example, various types of processing such as automatic exposure adjustment, automatic white balance adjustment, matrix processing, edge enhancement, brightness compression, and gamma processing are performed on the image data (RAW data), and signal-processed image data is output. The image data (RAW data) may be output from the camera 20, and the signal processing may be executed by a processor such as the CPU 11.

The meeting server 50 is a general-purpose PC, and includes a CPU, a main memory, a secondary storage, a communication interface, and the like, similar to the information processing apparatus 10 described above. The meeting server 50 has various types of data, applications, and the like required for providing the Web meeting, and the Web meeting is realized by connecting each information processing apparatus 10 to the meeting server 50 via the network 5. Since many well-known technologies have been proposed for the method of realizing the Web meeting, these well-known technologies may be adopted as appropriate.

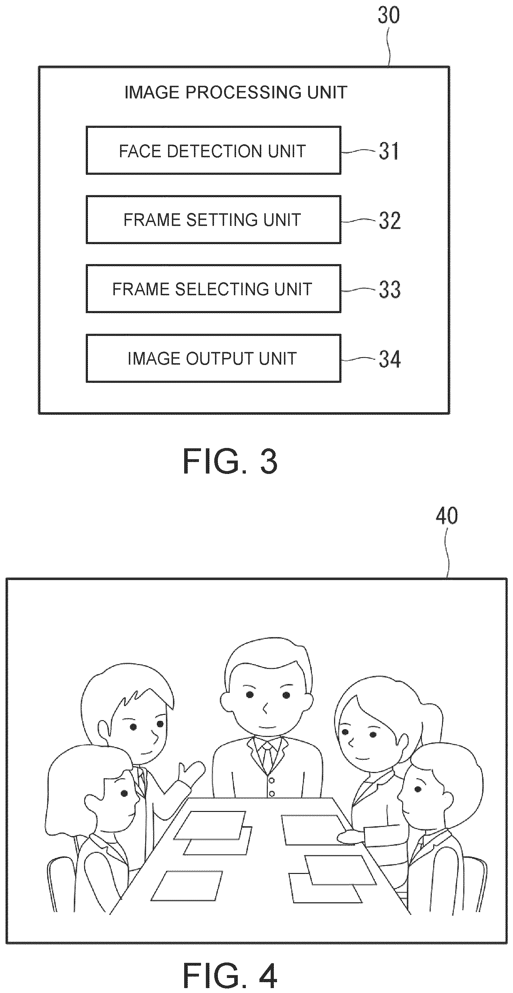

Next, an example of an image processing function of the information processing apparatus 10 according to the present embodiment will be described with reference to the drawings. FIG. 3 is a functional block diagram illustrating an example of an image processing function provided in the information processing apparatus 10 according to the present embodiment.

As an example, a series of processing for realizing various functions, which will be described later, is stored in the secondary storage 13 or the like provided in each information processing apparatus 10 in a form of a program (for example, an image processing program), and the CPU (processor) 11 reads out the program to the main memory 12 and executes processing and arithmetic operations of the information, thereby realizing various functions. For example, the image processing program may be implemented in an application that executes the Web meeting.

As the image processing program, a form in which the program is installed in the secondary storage 13 in advance, a form in which the program is provided in a state of being stored in another computer readable storage medium, a form in which the program is distributed via wired or wireless communication means, or the like may be applied. Examples of the computer readable storage medium include a magnetic disk, a magneto-optical disk, a CD-ROM, a DVD-ROM, a semiconductor memory, or the like.

As illustrated in FIG. 3, an image processing unit 30 includes a feature detection unit, a frame setting unit 32, a frame selecting unit 33, and an image output unit 34.

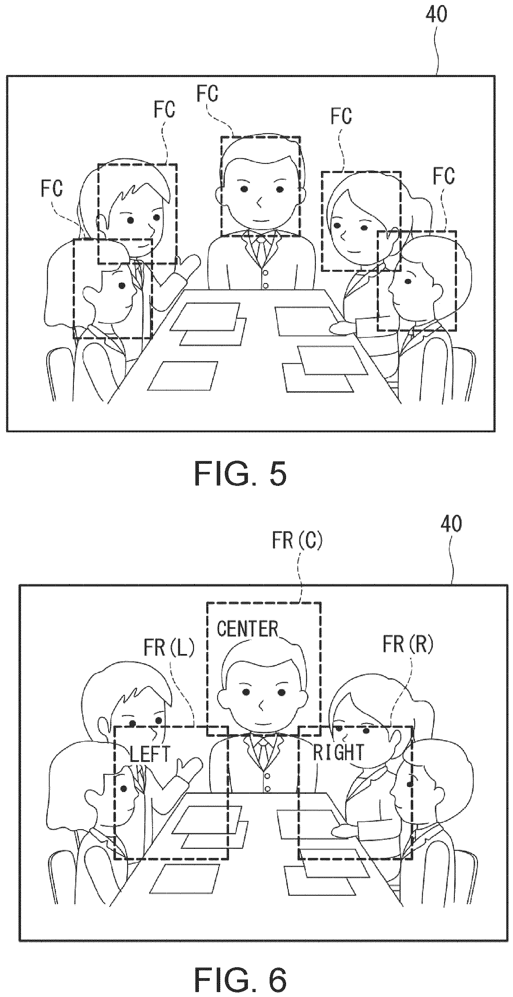

The feature detection unit detects a feature region based on a feature related to a person in the image acquired by the camera 20. For example, as an example of the feature detection unit, the face detection unit 31 is exemplified. The face detection unit 31 detects a face (specifically, a region of face, hereinafter referred to as a "face region") included in the image acquired by the camera 20. For example, the face detection unit 31 extracts feature points of the face included in the image and detects the face region using the extracted feature points. Since many well-known technologies have been proposed for detection of the face region, these well-known technologies may be adopted as appropriate. Accordingly, for example, in a case where an image 40 illustrated in FIG. 4 is acquired by the camera 20, five face regions FC are detected as illustrated in FIG. 5.

In the present embodiment, the face detection unit is used as an example of the feature detection unit, but the present disclosure is not limited to this. For example, the feature detection unit may have a function of detecting a feature related to a person in the image and detecting the feature region based on the detected feature. For example, the feature related to the person is not limited to part of the face, and may be other parts (for example, head, shoulder, upper body, and whole body). For example, the feature detection unit may detect the feature region in the image according to a pre-registered algorithm based on a position and/or size of the features (for example, eyes, a nose, a head, shoulders, arms) related to the person detected in the image.

The frame setting unit 32 virtually sets a plurality of frames FR in the image 40 in accordance with the face region FC detected in the image 40. In other words, the frame FR is virtually set in the processing in the information processing apparatus 10. In addition, the set virtual frame FR may be displayed, as an image, on the output device 17. In this case, the frame setting unit 32 may set the frame FR such that each face region FC is included in any frame FR and each face region FC is not included in the plurality of frames FR (excluding an entire frame described below).

For example, the frame setting unit 32 has default information. The default information includes, for example, the number of frames to be set in the image 40. Specifically, the default information includes the number of frames to be set in the image 40, and a default size and a default position of each frame.

For example, the frame setting unit 32 has a plurality of modes and has default information on the frame for each mode. Examples of the mode include a meeting mode, and a conference mode. Here, in the meeting mode, a plurality of modes may be further set according to the number of persons (that is, the number of face regions). For example, a small-scale meeting mode of four or less persons, a large-scale meeting mode of five to eight persons, and a group meeting mode in which a plurality of groups hold discussion are exemplified. The conference mode corresponds to a case where the number of persons is nine or more.

The mode described above may be selected by the user, or the mode may be automatically specified from the features of the image. The feature of the image includes at least one of the number of face regions FC, a distance from the camera 20 to the person (in other words, the size of the face in the image), a position of furniture such as a table in the image, or disposition of the face region FC.

In addition, a configuration in which the mode can be customized may be adopted. For example, the position of the table in the meeting room and the position of the chair are determined to some extent. In addition, since an installation position of the camera 20 is also relatively unchanged in many cases, an angle of view is also determined to some extent. Therefore, a configuration in which the image of the meeting room and a custom mode can be registered in advance in association with each other may be adopted. In a case of the mode selection, the frame setting unit 32 may select the mode in accordance with a degree of match between the image acquired by the camera 20 and the image registered in advance as each custom mode by collating the two images. By setting a priority of the custom mode higher than the above-described mode (hereinafter, referred to as a "general mode"), first, whether or not the custom mode is applicable may be determined, and in a case where there is no applicable custom mode, the mode may be specified from the above-described general mode.

In a case where any one mode is specified from among the plurality of modes, the frame setting unit 32 acquires default information associated with the specified mode, and sets a default frame FR within the image based on the acquired default information. As a result, for example, as illustrated in FIG. 6, the frame FR of the default size is set at a default position in the image 40. In FIG. 6, as an example, the frames FR(C), FR(R), and FR(L) are set as defaults at the center, right, and left of the image 40, respectively. In the following description, in a case where it is not necessary to distinguish between the center, the right, and the left frames, the frames are referred to as a frame FR, and in a case where it is necessary to distinguish the frames, the frames are referred to as a right frame FR(R), a central frame FR(C), and a left frame FR(L). In FIG. 6 and the like, for convenience of description, the frames FR are illustrated in a visualized manner, but the frames FR may be information that is virtually set. In addition, the same applies to the above-described face region FC.

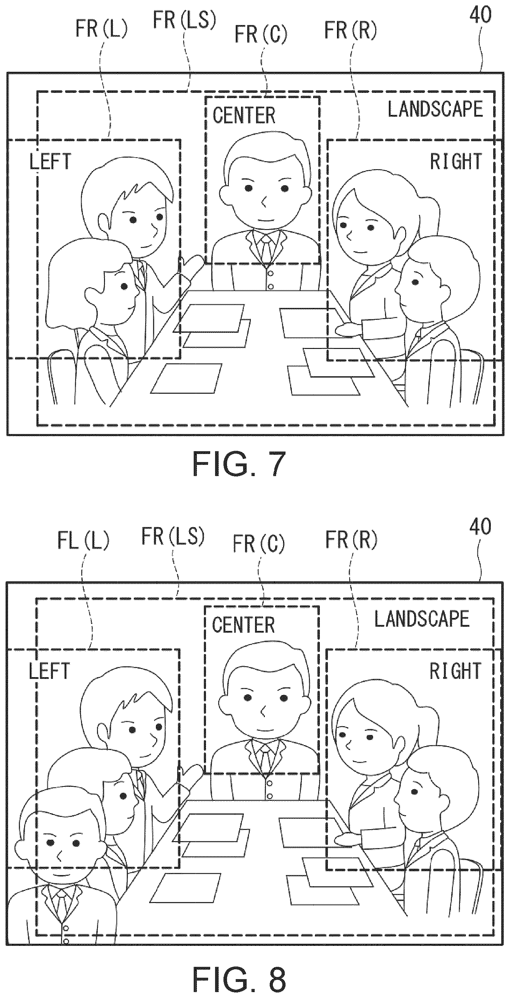

Subsequently, the frame setting unit 32 sets the plurality of frames FR in the image 40 by moving each set frame FR according to the face region FC included in the image 40 and performing size adjustment. For example, the position and size are adjusted to include all the face regions FC included in each frame FR set at the default position. Here, in the size adjustment, the size is adjusted such that an aspect ratio (horizontal to vertical ratio) of each frame FR is a preset value. As a result, for example, the frame FR as illustrated in FIG. 7 is set in the image 40. Further, the entire frame FR (LS) including all the face regions FC in the image 40 may be additionally set.

The frame setting unit 32 may perform the adjustment described above or resetting of the frame FR in a case where a predetermined event occurs. For example, the frame setting unit 32 may perform adjustment or resetting of the frame FR in a case where the number of faces in the image 40 is changed or in a case where the number of faces in each frame FR is changed.

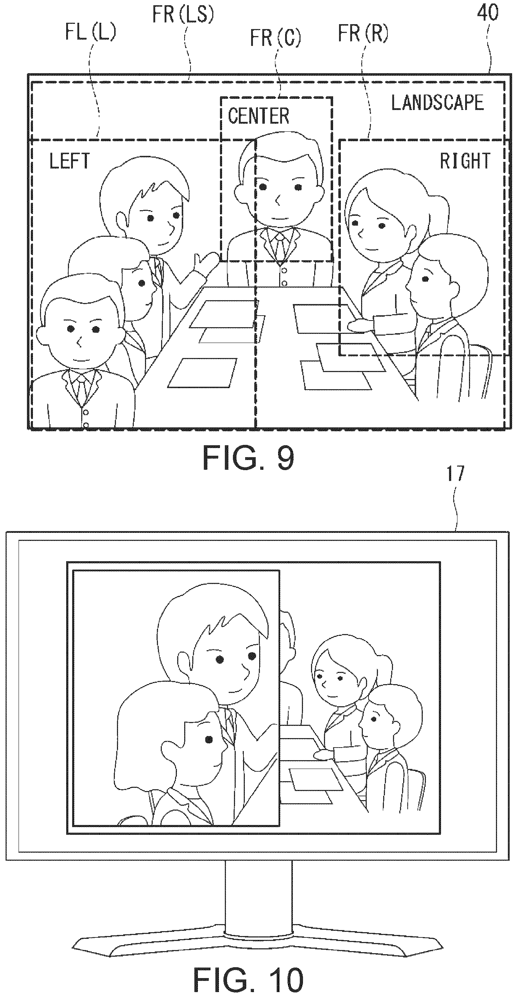

For example, as illustrated in FIG. 8, in a case where the number of faces in the image 40 is changed due to an increase in the number of persons during the meeting, the frame setting unit 32 adjusts at least one frame FR such that the added face region FC is included in any one frame FR. FIG. 8 illustrates a case where the number of persons in the front-left of the image 40 is increased. In this case, the left frame FR(L) closest to the added person is specified, and the specified left frame FR(L) is expanded to include the added face region FC, thereby performing adjustment of the left frame FR(L). As a result, as illustrated in FIG. 9, the left frame FR(L) is expanded, and the entire frame FR(LS) is also expanded. In this case, it is preferable that an aspect ratio of the frame FR is maintained before and after the adjustment. Instead of readjustment, resetting of the frame FR may be performed.

The frame selecting unit 33 specifies a frame FR of interest among the plurality of frames FR as the frame of interest based on a predetermined selection condition. For example, the frame selecting unit 33 selects the frame FR including the speaker as a frame of interest. For example, one example of specifying a speaker is to use a method of specifying a speaker using direction of arrival (DOA) information which is a well-known technology. Specifically, an arrival direction of the sound is analyzed based on audio data acquired by the microphone 19, and the frame FR that matches the arrival direction is selected as the frame of interest. In addition, the speaker may be specified in accordance with the movement of the mouth of the face region FC, the size of the gesture, and the like in the image 40.

Since various well-known technologies have been proposed for specifying the speaker, these well-known technologies may be adopted as appropriate.

In a case where there are a plurality of frames FR satisfying the selection condition, the frame selecting unit 33 selects the plurality of frames satisfying the selection condition as the frames of interest. Specifically, in a case where a plurality of persons are speaking at the same time, all the frames FR including the speaker are selected as the frames of interest. Further, in a case where there is no speaker, the frame selecting unit 33 selects the entire frame FR (LS) as the frame of interest.

The selection condition of the frame of interest described above is an example, and may be set as appropriate according to the operation. For example, regardless of the speaker, the frame of interest may be sequentially switched in the plurality of frames FR at a predetermined time interval. In addition, in a case where there is no speaker, the right frame FR(R), the central frame FR(C), and the left frame FR(L) may be sequentially switched at the predetermined time interval and selected as the frame of interest, instead of selecting the entire frame.

The image output unit 34 outputs the image of the frame of interest as a highlight image to be highlighted. As a result, for example, in a case where the frame of interest is changed, the highlight image is switched in accordance with the change of the frame of interest.

For example, in the image 40 illustrated in FIG. 7, in a case where the frame of interest is changed from the right frame FR(R) to the left frame FR(L), the image output unit 34 outputs the image of the left frame FR(L) instead of the image of the right frame FR(R) which has previously been output as the highlight image. For example, the highlight image is transmitted to the meeting server 50 via the network 5 (see FIG. 1) together with the audio data acquired by the microphone 19, and is further transmitted to the information processing apparatus 10 participating in the Web meeting via the meeting server 50. As a result, as illustrated in FIG. 10, for example, an image in which the highlight image is highlighted is displayed on a display screen of the information processing apparatus 10. In the screen example illustrated in FIG. 10, the highlight image is an image superimposed on the entire frame FR(LS) image, but the screen example is not limited to this, and may be any in which the highlight image is displayed in a highlighted aspect compared to other images.

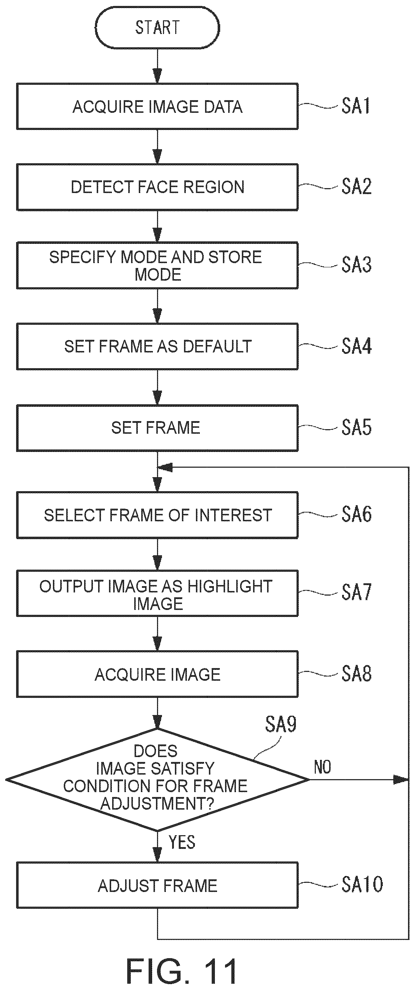

Next, an image processing method executed by the information processing apparatus 10 will be described with reference to FIG. 11. FIG. 11 is a flowchart illustrating an example of a processing procedure of the image processing method according to the present embodiment. For example, the following processing is started in a case where the Web meeting application is launched and the camera 20 is turned on, and after the start, the processing is repeatedly executed at a predetermined time interval or for each predetermined number of image frames input from the camera 20. Then, the processing ends in a case where the web meeting application is ended or the camera 20 is turned off.

As illustrated in FIG. 11, first, in a case where image data is acquired from the camera 20 (SA1), the initial setting of the frame FR is performed. In the initial setting of the frame FR, a face region FC included in the image 40 based on the image data is detected (SA2). Subsequently, a mode is specified based on the detected face region FC and a feature of the image 40 (SA3), and the frame FR is set as default in the image 40 based on default information associated with the mode (SA4). Subsequently, a position and a size of the frame FR are adjusted based on the face region FC included in the image 40, and the frame FR is set (SA5).

In this way, in a case where the initial setting of the frame is performed, a frame of interest is selected based on a predetermined condition (SA6). As a result, for example, in a case where there is a speaker, a frame including the speaker is selected as a frame of interest. In this case, in a case where there are a plurality of frames including the speaker, the plurality of frames are selected as the frames of interest. Further, in a case where there is no speaker, for example, the entire frame FR (LS) is selected as the frame of interest. Subsequently, an image of the frame of interest is output as a highlight image (SA7). In this case, in a case where the plurality of frames of interest are selected, an image obtained by merging the images of the plurality of selected frames of interest may be generated, and the generated image may be output as the highlight image.

As a result, for example, the image data of the highlight image is transmitted to the meeting server 50 (see FIG. 1) via the network 5 together with the audio data acquired by the microphone 19, and is further transmitted to each information processing apparatus 10 participating in the Web meeting via the meeting server 50. As a result, for example, the image in which the image of the frame of interest is highlighted as illustrated in FIG. 10 is displayed on the display screen of the information processing apparatus 10 participating in the Web meeting.

Subsequently, the image data acquired by the camera 20 is acquired (SA8), and it is determined whether or not the image 40 satisfies the condition for the frame adjustment based on the acquired image data (SA9). For example, it is determined whether the number of face regions FC included in the image 40 is increased or decreased, or whether the number of face regions FC included in each frame FR is increased or decreased. As a result, in a case where any of the conditions is satisfied, it is determined that the condition of the frame adjustment is satisfied (YES in SA9), and the frame adjustment is performed (SA10). On the other hand, in a case where the condition for frame adjustment is not satisfied (NO in SA9), it is considered that the frame does not need to be adjusted, the processing returns to Step SA6, and the subsequent processing is repeatedly executed.

By repeating the processing after step SA6, in a case where the frame of interest is changed due to the change of the speaker, the image of the frame of interest after the change is output as the highlight image. As a result, for example, the image (highlight image) of the speaker is switched and displayed on the display screen of the information processing apparatus 10 participating in the Web meeting.

As described above, according to the information processing system (information processing apparatus 10), the image processing method, and the image processing program according to the present embodiment, the plurality of frames FR are set based on the face region FC included in the image 40, the frame of interest is selected from the plurality of frames FR based on the predetermined condition, and the image of the selected frame of interest is output as the highlight image. As a result, for example, the image of the frame including the speaker is switched and displayed in accordance with the change of the speaker, on the display screen of each information processing apparatus 10 participating in the Web meeting. As a result, it is possible to provide a stable image in which the flicker of the image is reduced as compared with the related art, thereby improving the user experience.

The present disclosure has been described above using the embodiment, however, the technical scope of the present disclosure is not limited to the scope described in the above-described embodiment. Various settings or improvements can be made to the above-described embodiment within a scope which does not depart from the gist of the present disclosure, and forms with the settings or improvements are also included in the technical scope of the present disclosure.

In addition, the flow of the processing described in the above-described embodiment is also an example, and unnecessary steps may be deleted, new steps may be added, or the processing order may be changed within a scope which does not depart from the gist of the present disclosure.

For example, in the above-described embodiment, an aspect in which the highlight image is switched is used in a case where the frame of interest is switched, but a display aspect in which the camera work is gradually moved from the highlight image before the switching to the highlight image after the switching may be used instead of the aspect in which the highlight image is switched.

In addition, the display screen illustrated in FIG. 10 is an example, and the display aspect of the highlight image is not limited thereto. For example, the display screen may be divided into two or more regions, and the highlight image may be displayed in one of the regions and the image of the entire frame FR(LS) may be displayed in the other region.

In addition, in the above-described embodiment, in a case where the frame of interest is change, and the frame of interest after the change is maintained for a predetermined period, the image output unit 34 may output the image of the frame of interest as the highlight image. As a result, it is possible to suppress the change in the output image due to the frequent change of the frame of interest, and it is possible to display a stable image on each information processing apparatus 10.

In addition, in the above-described embodiment, a case where the information processing apparatus 10 has a function of the image processing unit 30 has been described, but the present disclosure is not limited thereto. For example, some functions of the image processing unit 30 may be provided in the camera 20. In addition, the function of the DOA used in a case where the frame selecting unit 33 specifies the speaker may be incorporated into the microphone 19. In this case, information on the DOA is acquired from the microphone 19, and the frame of interest is specified.

In addition, the image processing unit 30 may be provided in the meeting server 50. In this case, the image data acquired by the camera 20 and the audio data acquired by the microphone 19 are transmitted to the meeting server 50 via the network 5. The image processing unit 30 of the meeting server 50 executes the above-described image processing method based on the received image data, and transmits the image data including the highlight image and the audio data to each information processing apparatus 10. Accordingly, the Web meeting is smoothly realized. Description of Symbols
- 1: Web meeting system
- 5: network
- 10: information processing apparatus
- 11: CPU
- 12: main memory
- 13: secondary storage
- 14: external interface
- 15: communication interface
- 16: input device
- 17: output device
- 18: speaker
- 19: microphone
- 20: camera
- 21: bus
- 30: image processing unit
- 31: face detection unit
- 32: frame setting unit
- 33: frame selecting unit
- 34: image output unit
- 40: image
- 50: meeting server
- FC: face region
- FR: frame
- FR(C): central frame
- FR(R): right frame
- FR(L): left frame
- FR(LS): entire frame

## Claims

1. An information processing system (10) comprising:
a feature detection unit (31) configured to detect a feature region based on a feature related to a person in an image (40) acquired by a camera (20);
a frame setting unit (32) configured to virtually set a plurality of frames in the image in accordance with the detected feature region;
a frame selecting unit (33) configured to select a frame of interest from among the plurality of frames based on a predetermined condition as a frame of interest; and
an image output unit (34) configured to output an image of the frame of interest as a highlight image to be highlighted.

2. The information processing system according to claim 1,
wherein the frame setting unit comprises default information associated with a plurality of modes, and the default information includes the number of frames to be set in the image.

3. The information processing system according to claim 2,
wherein the frame setting unit specifies any one of the modes based on the feature of the image, and
the feature of the image includes at least one of the number of face regions, a size of the face region in the image, a position of furniture in the image, and a disposition of the face region.

4. The information processing system according to claim 2,
wherein the default information includes the number of frames to be set in the image, a default size, and a default position of each frame, and
the frame setting unit specifies any one of the modes in accordance with the feature of the image, virtually sets a plurality of frames of a default size and a default position in the image based on default information corresponding to the specified mode, moves each of the set frames in accordance with a face region included in the image, and performs size adjustment to virtually set the plurality of frames in the image.

5. The information processing system according to claim 1,
wherein the frame setting unit performs adjustment or resetting of the frame in a case where a predetermined event occurs.

6. The information processing system according to claim 1,
wherein the frame setting unit performs adjustment or resetting of the frame in a case where the number of face regions in the image or the number of face regions in each frame is changed.

7. The information processing system according to claim 1,
wherein the frame setting unit sets the frame such that each face region is included in any of the frames and each face region is not included in the plurality of frames.

8. An image processing method comprising:
detecting (SA2) a feature region based on a feature related to a person in an image (40) acquired (SA1) by a camera (20);
virtually setting (SA5) a plurality of frames in the image in accordance with the detected feature region;
selecting (SA6) a frame of interest from among the plurality of frames based on a predetermined condition as a frame of interest; and
outputting (SA7) an image of the frame of interest as a highlight image to be highlighted.

9. The image processing method according to claim 8,
wherein the number of frames to be set in the image is determined by default information associated with a plurality of modes.

10. The image processing method according to claim 9, comprising
specifying (SA3) any one of the modes based on the feature of the image, wherein
the feature of the image includes at least one of the number of face regions, a size of the face region in the image, a position of furniture in the image, and a disposition of the face region.

11. The image processing method according to claim 9,
wherein the default information includes the number of frames to be set in the image, a default size, and a default position of each frame, and the method comprises
specifying any one of the modes in accordance with the feature of the image, virtually setting a plurality of frames of a default size and a default position in the image based on default information corresponding to the specified mode, moving each of the set frames in accordance with a face region included in the image, and performing size adjustment to virtually set the plurality of frames in the image.

12. The image processing method according to claim 8, comprising
performing adjustment (SA10) or resetting of the frame in a case where a predetermined event occurs (SA9).

13. The image processing method according to claim 8, comprising
performing adjustment or resetting of the frame in a case where the number of face regions in the image or the number of face regions in each frame is changed.

14. The image processing method according to claim 8, comprising
setting the frame such that each face region is included in any of the frames and each face region is not included in the plurality of frames.

15. An image processing program for causing a computer to execute the image processing method according to any one of claims 8 to 14.
